# EUROPEAN PATENT APPLICATION

(11) **EP 4 305 966 A1**
(43) Date of publication of application: **17.01.2024**
(21) Application number: 22791571.7
(22) Date of filing: 31.03.2022
(51) Int. Cl.: A23J 1/14, A23J 3/00

(54) **LIQUID EGG-SUBSTITUTE COMPOSITION AND THERMALLY COAGULATED PRODUCT**

(30) Priority: 23.04.2021 JP 2021073288
(71) Applicant: Kewpie Corporation, Tokyo 150-0002 (JP)
(72) Inventor: ISOBE, Kazuhiro, Chofu-shi, Tokyo 182-0002 (JP); SUZUKI, Takahisa, Chofu-shi, Tokyo 182-0002 (JP); SHIRAISHI, Atsushi, Chofu-shi, Tokyo 182-0002 (JP)
(74) Representative: Winter, Brandl - Partnerschaft mbB
(86) International application number: PCT/JP2022/016551
(87) International publication number: WO 2022/224796

(57) **Abstract**

A liquid egg-substitute composition according to the present invention is a liquid egg-substitute composition that contains an extracted protein of almond and curdlan, in which a content of the protein extracted from almond is 1 mass% or more and 15 mass% or less.

## Description

### Technical Field

The present invention relates to a liquid egg-substitute composition and a heat-coagulated product thereof.

### Background Art

A cooked egg product such as a scrambled egg obtained by heating and coagulating a liquid egg has been eaten favorably because of their rich flavor unique to eggs, bright colors, and the like. Meanwhile, in recent years, various liquid egg-substitute composition that use a plant-based protein without the use of eggs have been developed, due to concerns about health and growing preference for plant-based foods.

Patent Literature 1 describes an egg replacer including a purified mung bean protein isolate, characterized by having one or more organoleptic properties similar to those of eggs.

Patent Literature 2 describes an egg replacer including a purified adzuki bean protein isolate, characterized by having one or more organoleptic properties similar to those of eggs.

Patent Literature 3 describes a powder composition for replacing eggs, characterized by including a soybean protein material and oxidized starch.

### Citation List

### Patent Literature

Patent Literature 1: Japanese Unexamined Patent Application Publication No. 2019-509036
Patent Literature 2: Japanese Unexamined Patent Application Publication No. 2019-505226
Patent Literature 3: Japanese Patent Application Laid-open No. 2018-038318

### Summary of Invention

### Problem to be solved by the Invention

However, when trying to prepare a soboro (fine scrambled egg)-like heat-coagulated product such as a scrambled egg and an iri-tamago (Japanese scrambled egg) using a liquid egg-substitute composition that contains a plant-based protein, there has been a problem that it is difficult to obtain soboro (fine scrambled egg)-like appearance such as scrambled-egg-like appearance or iri-tamago (Japanese scrambled egg)-like appearance, e.g., the heat-coagulated product is not of soboro (fine scrambled egg)-like with an appropriate size. Further, there is also a problem of texture, such as a problem that roughness of the plant-based protein is felt, and it has been difficult to obtain a liquid egg-substitute composition capable of preparing a heat-coagulated product that is excellent in both appearance and texture.

In view of the circumstances as described above, it is an object of the present invention to provide a liquid egg-substitute composition capable of preparing a heat-coagulated product that is excellent in both appearance and texture.

### Means for solving the Problem

As a result of intensive research to achieve the above-mentioned object, the present inventors have found that a liquid egg-substitute composition capable of preparing a heat-coagulated product such as a scrambled egg, which is excellent in both appearance and texture, can be obtained by using an extracted protein of almond and curdlan in combination and completed the present invention.

That is, the present invention is
(1) A liquid egg-substitute composition that contains an extracted protein of almond and curdlan, wherein
   a content of the extracted protein of almond is 1 mass% or more and 15 mass% or less.
(2) The liquid egg-substitute composition according to (1), in which
   a content of curdlan is 1 mass% or more and 8 mass% or less.
(3) The liquid egg-substitute composition according to (1) or (2), further including
   3 mass% or more and 15 mass% or less of a lipid.
(4) A heat-coagulated product prepared by using the liquid egg-substitute composition according to any one of (1) to (3).

### Effects of the Invention

According to the present invention, it is possible to provide a liquid egg-substitute composition capable of preparing a heat-coagulated product that is excellent in both appearance and texture.

### Mode(s) for Carrying Out the Invention

The present invention will be described below in detail. Note that in the present invention, "%" means "mass%".

### <Liquid egg-substitute composition>

A liquid egg-substitute composition according to the present invention is a liquid egg-substitute composition containing no egg or a small amount of egg, characterized by containing 1 mass% or more and 15 mass% or less of an extracted protein of almond, and curdlan. The liquid egg-substitute composition according to the present invention is capable of preparing a heat-coagulated product having appearance and texture close to those of a heat-coagulated egg such as a real scrambled egg or a real iri-tamago (Japanese scrambled egg), by heating similarly to a liquid egg.

The phrase "containing no egg" means that it does not contain a raw material derived from eggs of birds generally used for food, such as eggs of chicken, quail, and duck, and the phrase "containing a small amount of egg" means that it contains 5 mass% or less, favorably 3 mass% or less, and more favorably 1 mass% or less of the raw material derived from eggs of birds in the liquid egg-substitute composition.

### <Liquid egg>

In the present invention, a liquid egg refers to an unheated liquid egg obtained by uniformly mixing liquid egg white and liquid egg yolk obtained by cracking eggs of birds generally used for food.

Since the liquid egg has heat coagulability, it is often eaten as a heat-coagulated egg. For this reason, as a liquid egg substitute, it is desired that it has heat coagulability equivalent to the liquid egg and the texture of the heat-coagulated product is close to that of the heat-coagulated egg. Further, it is desired to have fluidity equivalent to that of the liquid egg because it is easy to use for cooking.

### <Heat-coagulated egg>

In the present invention, the heat-coagulated egg means a heat-coagulated product of the liquid egg. Examples of the heat-coagulated egg include a scrambled egg, an omelet, a fried egg, a iri-tamago (Japanese scrambled egg), an usuyaki tamago (thin omelet), a kinshi tamago (thinly sliced egg), and a cooked product including these.

### <Heat-coagulated product>

The heat-coagulated product according to the present invention refers to a heat-coagulated product of the liquid egg-substitute composition according to the present invention. The heat-coagulated product is obtained by heating the liquid egg-substitute composition by a frying pan, a hot water bath, or another appropriate method to solidify (be made gelled). The heat-coagulated product according to the present invention can be used as a heat-coagulated egg substitute.

### <Extracted protein of almond>

The liquid egg-substitute composition according to the present invention is characterized by containing the extracted protein of almond. The extracted protein of almond refers to a protein extracted from almond. The extracted protein of almond has the optimal solubility to water. That is, since the solubility to water is low, it is possible to prepare a soboro (fine scrambled egg)-like heat-coagulated product without inhibiting the formation of a gel network by curdlan. Meanwhile, since it is slightly dissolved in water, the roughness of the protein powder is difficult to feel, and a heat-coagulated product having excellent texture can be obtained. Further, in terms of color tone, it has white-based light color tone. This makes it easier to reproduce yellow color tone close to that of the heat-coagulated egg, as compared with other plant-based proteins having dark color tone such as brown, black, and gray. Further, the extracted protein of almond has less odor unique to the material. This makes it easier to obtain a heat-coagulated product having flavor closer to that of the heat-coagulated egg.

As described above, the liquid egg-substitute composition according to the present invention has all the properties of heat coagulability and fluidity required as a liquid egg substitute and texture without roughness, light color tone, and favorable flavor required as a heat-coagulated egg substitute. Therefore, according to the present invention, it is possible to obtain a liquid egg-substitute composition having more excellent properties as a liquid egg substitute for preparing a heat-coagulated egg.

### <Content of extracted protein of almond>

The liquid egg-substitute composition according to the present invention contains 1 mass% or more and 15 mass% or less of the extracted protein of almond. In the case where the extracted protein of almond is less than the range described above, even if a heat-coagulated product is prepared, it is not of soboro (fine scrambled egg)-like with an appropriate size when heated. Further, in the case where the extracted protein of almond is more than the range described above, roughness of the extracted protein of almond is felt. Further, the fluidity is reduced, making it difficult to use for cooking.

Further, the liquid egg-substitute composition according to the present invention favorably contains 2 mass% or more and 10 mass% or less of the extracted protein of almond, and more favorably contains 3 mass% or more and 7 mass% or less of the extracted protein of almond, because a heat-coagulated product having more excellent appearance and texture can be easily obtained after heating. Note that the ratio of the extracted protein of almond refers to the ratio of only the protein extracted from almond, and does not include components other than the protein extracted from almond.

### <Curdlan>

In the present invention, curdlan is a general term for a heat coagulable polysaccharide mainly containing glucose linked with a β-(1,3)-glycosidic bond. Examples thereof include a polysaccharide produced by the fungus *Alcaligenes faecalis* var. *myxogenes.* Since curdlan is commercially available, it only needs to use a commercially available product. Although the ratio of curdlan contained in the liquid egg-substitute composition according to the present invention is not particularly limited, it can be 1 mass% or more and 8 mass% or less and is favorably 2 mass% or more and 7 mass% or less, because a heat-coagulated product having excellent appearance and texture can be easily obtained.

### <Lipid>

The liquid egg-substitute composition according to the present invention favorably further contains 3 mass% or more and 15 mass% or less of a lipid. As a result, the composition of the liquid egg-substitute composition can be made closer to the composition of the liquid egg, and it becomes easy to feel the richness close to that of the heat-coagulated egg after heating. Further, the liquid egg-substitute composition according to the present invention favorably contains 4 mass% or more of a lipid, and favorably contains 12 mass% or less, more favorably contains 10 mass% or less, of a lipid.

The liquid egg-substitute composition according to the present invention favorably contains edible fats and oils from the viewpoint of adjusting the content of a lipid to the range described above. Examples of the edible fats and oils include animal and vegetable oils, refined oils thereof, and fats and oils obtained through chemical or enzymatic treatment. Examples of the animal and vegetable oils include rapeseed oil, corn oil, cottonseed oil, safflower oil, olive oil, safflower oil (benibana oil), soybean oil, palm oil, milk fat, beef tallow, lard, and egg yolk oil. Examples of the fats and oils obtained through chemical or enzymatic treatment include MCT (medium chain fatty acid triglyceride), diglyceride, hydrogenated oil, enzyme-treated egg yolk oil. These edible fats and oils may be used alone or two or more of them may be used in combination.

### <Other raw materials>

The liquid egg-substitute composition according to the present invention may contain a raw material other than the above as long as the effects of the present invention are not impaired. Examples of such a raw material include seasonings such as soy sauce, salt, pepper, and an amino acid, a saccharide such as granulated sugar, white sugar, brown sugar, fructose corn syrup, starches, dextrin, fructose, trehalose, glucose, lactose, oligosaccharide, and sugar ethanol, a bacteriostatic agent such as glycine and sodium acetate, a pH adjuster such as organic acid and organic acid salt, a preservative, an antioxidant, and a flavoring agent.

### <Method of producing liquid egg-substitute composition>

A method of producing the liquid egg-substitute composition according to the present invention includes, for example, a step of preparing an extracted protein of almond and curdlan; and a step of preparing a liquid egg-substitute composition such that the extracted protein of almond is 1 mass% or more and 15 mass% or less.

### <Step of preparing extracted protein of almond>

In this step, an extracted protein of almond is prepared by a method such as purchasing a commercially available extracted protein of almond or extracting a protein from almond in accordance with a conventional method.

Examples of the method of extracting a protein include the following methods. First, almond is pretreated as necessary. As the pretreatment, for example, almond may be pulverized into a powder. Alternatively, in the case where it is not pulverized into a powder, the pulverized almond may be immersed in water or the like. Subsequently, a protein is eluted from the almond. For the elution of the protein, for example, an alkaline eluent containing sodium hydroxide or the like can be used. After that, insoluble materials are removed as necessary, and the protein dissolved in the eluate are precipitated. For the precipitation of the protein, an acid such as hydrochloric acid can be used. Then, after the precipitate is collected by centrifugation, filtration, or the like, the precipitate is neutralized as necessary to obtain a protein of almond.

Note that enzyme treatment such as transglutaminase treatment for enhancing the gelation property may be performed as necessary on the extracted protein.

### <Preparation step>

In this step, the extracted protein of almond, curdlan, water, and other raw materials are stirred and mixed to prepare a liquid egg-substitute composition. The extracted protein of almond is prepared to be 1 mass% or more and 15 mass% or less.

Note that after the preparation step, a heat sterilization step may be performed as necessary.

In this way, the liquid egg-substitute composition according to the present invention is produced.

The present invention will be specifically described below on the basis of Examples and Comparative Examples. Note that the present invention is not limited to these.

### (Example)

### <Test Example 1: Examination of plant-based protein>

Liquid egg-substitute compositions containing proteins extracted from various plant raw materials were prepared in accordance with the formulations shown in Table 1. Specifically, a gelling agent was mixed in water in advance and dispersed by stirring with a Hiscotron for five minutes. After that, a plant-based protein was dissolved therein. Finally, soybean oil and lecithin were added thereto and emulsified with the Hiscotron similarly for one minute to prepare a liquid egg-substitute composition. The prepared liquid egg-substitute composition was heated by a frying pan heated to approximately 170°C to prepare a scrambled-egg-like heat-coagulated product. The appearance and texture of the heat-coagulated product were evaluated in accordance with the following criteria. The results are shown in Table 1.

### [Evaluation criteria of appearance]

A: The gel became loose and a soboro (fine scrambled egg)-like, and the appearance was equivalent to that of the scrambled egg.
B: Soboro (fine scrambled egg)-like gels were entirely united, but the appearance was close to that of the scrambled egg.
C: The gel became a mass of paste, and the appearance was different from that of the scrambled egg.

### [Evaluation criteria of texture]

A: There was no roughness, and the texture was favorable.
B: Slight roughness was felt, but it was not particularly noticeable.
C: Roughness was felt, and the texture was not favorable.

**[Table 1]**

| | | Example 1 | Comparative Example 1 | Comparative Example 2 | Comparative Example 3 | Comparative Example 4 | Comparative Example 5 |
|---|---|---|---|---|---|---|---|
| Plant-based protein(%) | | | | | | | |
| | Almond protein | 5 | | | | | |
| | Pea protein | | 8 | | | | |
| | Rice protein | | | 8 | | | |
| | Soybean protein | | | | 9 | | |
| | Kidney bean protein | | | | | 8 | |
| | Black-eyed bean protein | | | | | | 7 |
| Curdlan(%) | | 3 | 3 | 3 | 3 | 3 | 3 |
| Soybean oil(%) | | 5 | 5 | 5 | 5 | 5 | 5 |
| Emulsifier (lecithin)(%) | | 1 | 1 | 1 | 1 | 1 | 1 |
| Pure water | | Residue | Residue | Residue | Residue | Residue | Residue |
| Evaluation (appearance: soboro (fine scrambled egg)-like) | | A | A | A | C | C | C |
| Evaluation (texture: roughness) | | A | C | C | A | A | A |

As shown in Table 1, it was found that a heat-coagulated product having excellent appearance and texture could be obtained by using the protein extracted from almond as a plant-based protein.

### <Test Example 2: Examination of content of protein>

Liquid egg-substitute compositions according to Examples 2 to 9 and a Comparative Example 6 were prepared in the same way as that in the Example 1 except that the content of the extracted protein of almond was changed to the ratio shown in Table 2. Each of the prepared liquid egg-substitute compositions was used to prepare a scrambled-egg-like heat-coagulated product in the same way as that in the Test Example 1, and the appearance and texture were evaluated. The results are shown in Table 2.

**[Table 2]**

| | Comparative Example 6 | Example 2 | Example 3 | Example 5 | Example 1 | Example 6 | Example 1 | Example 8 | Example 9 |
|---|---|---|---|---|---|---|---|---|---|
| Almond protein(%) | 0 | 2 | 3 | 4 | 5 | 6 | 7 | 8 | 12 |
| Evaluation (appearance: soboro (fine scrambled egg)-like) | C | A | A | A | A | A | A | A | A |
| Evaluation (texture: roughness) | A | A | A | A | A | A | A | B | B |

As shown in Table 2, it was found that a heat-coagulated product having excellent appearance and texture could be obtained by containing 1 mass% or more and 15 mass% or less of the protein extracted from almond. Further, the liquid egg-substitute compositions according to Examples 2 to 7 in which the protein concentration is 2 mass% or more and 7 mass% or less had high fluidity and were easy to prepare scrambled eggs.

Further, the scrambled egg prepared by the liquid egg-substitute composition having the protein concentration of 3 mass% or more and 7 mass% or less was favorable because the gel state was close to that of the real scrambled egg.

### <Test Example 3: Examination of gelling agent>

A liquid egg-substitute composition according to a Comparative Example 7 or 8 was prepared in the same way as that in the Example 1 except that curdlan was changed to gellan gum or agar. Each of the prepared liquid egg-substitute compositions were used to prepare a scrambled-egg-like heat-coagulated product in the same way as that in the Test Example 1, and the appearance and texture were evaluated. As a result, no roughness was felt from the heat-coagulated product prepared by the liquid egg-substitute composition according to the Comparative Example 7 or 8, but it became a mass of paste, and scrambled-egg-like appearance was not obtained.

### <Test Example 4: Examination of concentration of curdlan>

Liquid egg-substitute compositions according to Examples 10 to 14 and a Comparative Example 9 were prepared in the same way as that in the Example 1 except that the content of curdlan was changed to the ratio shown in Table 3. Each of the prepared liquid egg-substitute compositions was used to prepare a scrambled-egg-like heat-coagulated product in the same way as that in the Test Example 1, and the appearance and texture were evaluated. The results are shown in Table 3.

**[Table 3]**

| | Comparative Example 9 | Example 10 | Example 1 | Example 11 | Example 12 | Example 13 | Example 14 |
|---|---|---|---|---|---|---|---|
| Content of curdlan(%) | 0 | 2 | 3 | 4 | 5 | 6 | 7 |
| Evaluation (appearance: soboro (fine scrambled egg)-like) | C | B | A | A | A | A | A |
| Evaluation (texture: roughness) | A | A | A | A | A | A | B |

As shown in Table 3, it was found that a heat-coagulated product having excellent appearance and texture could be obtained by containing 1 mass% or more and 8 mass% or less of curdlan.

### [Example 15]

A liquid egg-substitute composition according to an Example 15 was prepared in the same way as that in the Example 1 except that the content of soybean oil was changed to 3%.

### [Example 16]

a liquid egg-substitute composition according to an Example 16 was prepared in the same way as that in the Example 1 except that the content of soybean oil was changed to 7%.

Each of the liquid egg-substitute compositions according to the Examples 15 and 16 was used to prepare a scrambled-egg-like heat-coagulated product in the same way as that in the Test Example 1, and the appearance and texture were evaluated. As a result, they were evaluated as A and favorable results were obtained.

## Claims

1. A liquid egg-substitute composition that contains an extracted protein of almond and curdlan, wherein
a content of the extracted protein of almond is 1 mass% or more and 15 mass% or less.

2. The liquid egg-substitute composition according to claim 1, wherein
a content of curdlan is 1 mass% or more and 8 mass% or less.

3. The liquid egg-substitute composition according to claim 1 or 2, further comprising
3 mass% or more and 15 mass% or less of a lipid.

4. A heat-coagulated product prepared by using the liquid egg-substitute composition according to any one of claims 1 to 3.
